# EUROPÄISCHE PATENTSCHRIFT

(11) **EP 3 020 514 B1**
(45) Veröffentlichungstag und Bekanntmachung des Hinweises auf die Patenterteilung: **11.10.2023**
(21) Anmeldenummer: 15193356.1
(22) Anmeldetag: 06.11.2015
(51) Int. Cl.: B25J 9/00, B25J 9/16, B25J 19/06

(54) **HANDHABUNGSVORRICHTUNG UND VERFAHREN ZUR HANDHABUNG VON ARTIKELN**
HANDLING DEVICE AND METHOD FOR HANDLING ITEMS
DISPOSITIF DE MANIPULATION ET PROCÉDÉ DE MANIPULATION D'ARTICLES

(30) Priorität: 17.11.2014 DE 102014223419; 19.06.2015 DE 102015211348
(43) Veröffentlichungstag der Anmeldung: 18.05.2016
(73) Patentinhaber: KRONES Aktiengesellschaft, 93073 Neutraubling (DE)
(72) Erfinder: KURSAWE, Andreas, 93073 Neutraubling (DE); KOLLMUSS, Manuel, 93073 Neutraubling (DE); HARTL, Michael, 93073 Neutraubling (DE)
(74) Vertreter: Benninger, Johannes

(56) Entgegenhaltungen:
- EP-A2- 2 572 842
- DE-A1-102013 001 110
- DE-A1-102013 001 110
- JP-A- 2007 214 395

## Beschreibung

Die vorliegende Erfindung betrifft ein Verfahren zum Greifen, Erfassen, Positionieren, Handhaben, Verschieben, Drehen, Umgruppieren und/oder zum Manipulieren von einzeln, paarweise oder in Gruppen auf einer Horizontalfördereinrichtung transportierten Artikeln, Gebinden oder Stückgütern mit den Merkmalen des unabhängigen Verfahrensanspruchs 1. Die Erfindung betrifft zudem eine Handhabungsvorrichtung mit den Merkmalen des unabhängigen Anspruchs 9.

Bekannte Verpackungs- oder Palettieranlagen zum Stapeln und Palettieren von Objekten wie Paketen oder Gebinden mit mehreren Artikeln wie bspw. Getränkebehältern weisen üblicherweise Horizontalfördereinrichtungen mit Förderbändern auf, auf denen die Stückgüter oder Gebinde in ununterbrochener oder unregelmäßiger Folge zu einer Handhabungseinrichtung befördert werden. Dort erfolgt eine Verschiebung, Ausrichtung und/oder Drehen einzelner Stückgüter oder Gebinde, um diese in eine geeignete räumliche Anordnung zu bringen, die eine Basis bildet, um die Stückgüter oder Gebinde in nachgeordneten Gruppierstationen zu stapelfähigen Stückgut- oder Gebindelagen zusammenzuschieben.

In aktuellen Abfüll- und Verpackungslinien werden unterschiedliche Verfahren zum Drehen von Gebinden eingesetzt, die bspw. geeignete bewegliche Anschläge oder zwei Bänder mit unterschiedlichen Geschwindigkeiten aufweisen können. Bekannte Handhabungseinrichtungen können auch mit Greifern versehen sein, die an einem Portalsystem aufgehängt und in einem definierten Bewegungsbereich verschoben, rotiert und zudem in vertikaler Richtung bewegt werden können, um einzelne Stückgüter oder Gebinde zum Drehen und/oder Verschieben anheben zu können. Die Greifer können wahlweise auch an Armen von Mehrachsrobotern angeordnet sein, die jeweils seitlich an den Horizontalfördereinrichtungen platziert sind.

Bei einer solchen Handhabung von Stückgütern oder Gebinden werden diese in der Praxis zum Zwecke eines Versetzens und/oder ihrer Ausrichtung erfasst, angehoben und in eine gewünschte Position bzw. Orientierung innerhalb einer Gruppierung überführt. Hierzu sind aus dem Stand der Technik bereits zahlreiche Greifvorrichtungen bekannt, so bspw. aus der EP 2 388 216 A1. Diese bekannte Greifvorrichtung besitzt zwei horizontal voneinander beabstandete und an einem zwischengeordneten Träger über mechanische Verbindungen angeordnete Greifarme. Die Greifarme können aufeinander zubewegt werden, um Objekte zu erfassen. Weiter sind die Greifarme bei definierter Krafteinwirkung in vertikaler Richtung und entgegen dem Träger vom Träger lösbar. Am freien Ende besitzen beide Greifarme Klemmbacken, die bei Erfassen von Objekten mit den jeweiligen Objekten in Oberflächenkontakt stehen.

Eine weitere Greifvorrichtung zeigt bspw. die DE 102 04 513 A1. Dort sind mehrere sich gegenüberliegende Greifarme in einem Mittelstück geführt. Ein Greifarm ist mittels eines Stellgliedes in Bezug auf einen weiteren Greifarm verschiebbar, so dass beide Greifarme geschlossen werden können. An den unteren Enden der Greifarme sind an den einander zugewandten Seiten Greifabschnitte zum Greifen von Baustoffpaketen vorgesehen.

Darüber hinaus gibt es weitere Handhabungseinrichtungen zum Greifen, Verschieben, Drehen und/oder Versetzen von Artikeln oder Gebinden, die auf sog. Deltarobotern oder Parallelkinematik-Robotern basieren, welche in einer dreiarmigen Ausführung auch als Tripode bezeichnet werden. Jeder der Arme eines solchen Tripods oder Deltakinematik-Roboters besteht aus einem an der Basis um eine gestellfeste Schwenkachse verschwenkbar angeordneten Oberarm und einem mit dem Oberarm und dem Koppelelement gelenkig verbundenen Unterarm. Während der Oberarm mit einem Antriebsmotor versehen ist, ist der Unterarm passiv, frei von einem Antrieb zu dessen Verschwenkung gegenüber dem Oberarm oder dem Koppelelement ausgeführt. Einer oder mehrere der Unterarme können bspw. über Kugelgelenke mit den jeweils zugehörigen Oberarmen und dem Koppelelement verbunden sein. Ein solcher einzelner Unterarm ist frei schwenkbar und besitzt keine Eigenstabilität. Alle Oberarme eines Deltaroboters sind jeweils um vorzugsweise innerhalb einer gemeinsamen Ebene liegende Schwenkachsen verschwenkbar angetrieben gelagert. Drei mit dem Koppelelement und jeweils mit ihrem zugehörigen Oberarm verbundene Unterarme bilden in jeder Position ein Kraftdreieck, das sich nur bewegen lässt, wenn die drei Oberarme synchron die für sie berechnete Schwenkbewegungen um deren gestellfeste Schwenkachsen ausführen. Zwei oder mehr Schwenkachsen können parallel verlaufen; in der Regel weisen alle Schwenkachsen zwei Schnittpunkte mit anderen Schwenkachsen auf.

Wenigstens einer der Unterarme kann aus zwei auch als Elle und Speiche bezeichneten, ein Parallelogrammgestänge bildenden Gestängeelementen bestehen, um das Koppelelement in zumindest einer vorgegebenen Ausrichtung relativ zur Basis zu führen. Das Koppelelement dient dabei als Arbeitsplattform, die in der Praxis auch als Tool-Center-Point (TCP) bezeichnet wird. An diesem TCP kann ein Manipulator angeordnet sein, bspw. in Gestalt von gegeneinander zustellbaren Greifarmen o. dgl. Handhabungseinrichtung, so dass damit Artikel, Gebinde o. dgl. Stückgüter ergriffen und gedreht, verschoben oder von einer Auflagefläche angehoben werden können.

Der an der Arbeitsplattform bzw. dem TCP angeordnete Manipulator kann wahlweise drehbar gelagert sein, um den Manipulator ausrichten oder eine gewünschte Drehung der Artikel oder Stückgüter ausführen zu können. Anstelle einer antreibbar drehbaren Lagerung des Manipulators am Koppelelement ist grundsätzlich auch denkbar, den Manipulator unverdrehbar am Koppelelement anzuordnen und das gesamte Koppelelement unter entsprechender Ausgleichbewegung der Arme vermittels der Teleskopwelle gegenüber der Basis zu verdrehen. Damit einhergehend ist jedoch der Nachteil eines nur eingeschränkten Drehwinkels des Koppelelements. Die Einschränkung ergibt sich durch das Erreichen von Endanschlägen der gelenkigen Verbindungen der Oberarme und/oder des Koppelelements mit den Unterarmen und/oder dem gegenseitigen Kontakt benachbarter Unterarme.

Aus der DE 10 2010 006 155 A1, aus der DE 10 2013 208 082 A1 sowie aus der US 8 210 068 B1 sind derartige Handhabungseinrichtung mit Tripoden bekannt.

Die bekannten Parallelkinematik-Roboter bzw. sog. Tripoden können einen für den jeweiligen Roboter verfügbaren Arbeitsraum abdecken, der sich aus der Länge der Oberarme, dem Abstand der Befestigung der Oberarme zum Mittelpunkt einer gestellfesten Basis, der Länge der Unterarme, dem Abstand der Befestigung der Unterarme zum Mittelpunkt des sog. Tool-Center-Points am Werkzeugträger und dem maximalen Schwenkbereich der Oberarme ergibt. Dieser Arbeitsraum ist bezogen auf den Tool-Center-Point in z-Richtung ein Zylinder, an dessen unteren Rand sich ein Kugelsegment anschließt. Ferner wird der Arbeitsraum am oberen Rand gegebenenfalls noch eingeschränkt durch maximale Schwenkwinkel kardanischer Teleskop-Antriebswellen.

Die Vorteile dieser Deltakinematik-Roboter bzw. Tripoden liegen in ihren geringen bewegten Massen, woraus eine hohe Dynamik aller Stellbewegungen resultiert. Eine besondere Herausforderung bei der Konstruktion solcher Parallelkinematik-Roboter bzw. sog. Tripoden stellt die Dimensionierung der Stellarme, ihrer Antriebe und ihrer Lagerungen dar. Zu knappe Dimensionierungen bergen die Gefahr elastischer Verformungen, was die Stellpräzision der Arme und der damit geführten Handhabungswerkzeuge negativ beeinflusst. Großzügige Bauteildimensionierungen verhindern elastische Verformungen und reduzieren Schwingungs- und Resonanzprobleme, führen jedoch fast zwangsläufig zu höheren Massen, die bewegt und beschleunigt werden müssen.

Dem Auftreten unerwarteter Ereignisse kann mit bekannten Deltarobotersystemen nur schwer begegnet werden. Derartige unerwartete Ereignisse können bspw. Kollisionen mit zu handhabenden Artikel, Gebinden oder Stückgütern sein, die nicht an einem erwarteten Platz stehen oder leicht verrutscht oder verdreht sind, so dass sie vom Greifwerkzeug, das mit den Stellarmen innerhalb des Bewegungsraumes bewegt werden kann, nicht in gewünschter Weise oder unter Umständen gar nicht erfasst werden können. Derartige Kollisionen können zu Folgeproblemen führen, so bspw. zu einem Lösen und/oder Herabfallen von lösbar fixierten Werkzeugteilen des Greifwerkzeuges, z.B. von magnetisch fixierten Greifbacken. Derartige unerwarteten Ereignisse müssen entweder durch Überwachungspersonen erkannt und/oder mittels optischer Überwachungseinrichtungen detektiert werden, damit die Maschinenumgebung abgeschaltet werden kann und weitere Störungen im Produktionsablauf bzw. Beschädigungen der Maschinenumgebung vermieden werden können.

Die EP 1 046 470 B1 offenbart ein Verfahren zum Betrieb eines mehrachsig beweglichen Industrieroboters und zur Verminderung eines Stoßes, wenn der Arbeitsroboter mit einem Hindernis kollidiert. Hierbei wird ein Zusammenstoß eines am Handgelenk des Roboters befestigten Endeffektors dann erkannt und diesem Zusammenstoß durch Reduzierung eines Antriebsmomentes begegnet, wenn ein auf einen der Servomotoren des Roboters ausgeübtes Störmoment einen festgelegten Schwellenwert überschreitet.

Die DE 10 2013 001 110 A1 offenbart einen Roboter zur Erfassung und Handhabung von Lebensmittelprodukten, bei dem zwischen einem Roboterarm und einer Handhabungseinheit ein Sensor angeordnet ist, mit welchem eine zwischen dem Roboterarm und der Handhabungseinheit wirkende Kraft bzw. eine vertikale oder horizontale Kraftkomponente oder auch eine Beschleunigung erfasst werden kann. Weiterhin ist vorgesehen, die Sensordaten über einen Zeitverlauf zu speichern und/oder auszuwerten, um daraus sinnvolle Anhaltspunkte für zukünftige Wartungsintervalle des Roboters zu gewinnen.

Aus der US 2005/0177279 A1 ist eine Sensoranordnung für einen Werkzeugkopf eines Parallelkinematik-Roboters bekannt, deren Sensorwerte bei Überschreiten eines vorgebbaren Grenzwertes für eine Abschaltung der Roboterantriebe sorgen sollen, wodurch eine effektive Kollisionsvermeidung geliefert werden soll.

Weiterhin ist durch das Dokument EP 2 572 842 A2 eine Vorrichtung mit einem Roboter beschrieben. Der Roboter weist eine Deltakinematik auf. Bei dem Roboter wird mindestens ein Zustandsparameter überwacht, und in Abhängigkeit eines Bewegungsprogramms bestimmt, ob eine vorbedingte Bedingung erfüllt wurde, welche eine Wartungsmaßnahme bedingt. Unter anderem kann der Antriebsstrom für Arme des Roboters mit einem Antriebssensor erfasst werden. Weiterhin kann die Geschwindigkeit der Arme mittels eines Inkrementalgebers im Antriebssensor erfasst werden. An den Roboterarmen können auch Roboterarmsensoren angeordnet sein, welche Vibration, Beschleunigung, Neigung und/oder Positionen der Roboterarme erfassen. Zudem können Kameras vorgesehen sein, mittels welcher Informationen Zustandsparameter der Vorrichtung berechnet werden können.

Weitere Kollisionsvermeidungsstrategien sind denkbar, doch benötigen diese allesamt eine relativ aufwendige Störmomenterfassung, um daraus Kollisionsereignisse ableiten zu können. Eine solche Drehmomenterfassung ermöglicht es jedoch in aller Regel nicht, Ereignisse unterhalb der Registrierungsschwelle von normalen Kollisionen mit festen oder beweglichen Gegenständen zu erkennen.

Ein vorrangiges Ziel der vorliegenden Erfindung kann dagegen darin gesehen werden, mit Hilfe von wenigen und kostengünstigen Sensoren unerwartete Ereignisse, die beim Betrieb von Handhabungssystemen auf Basis von Portalrobotern oder von Deltakinematik-Robotern auftreten können, zuverlässiger und besser erkennen zu können, um auf diese Weise den Betrieb solcher Handhabungssysteme zuverlässiger zu gestalten. Um dies zu erreichen, sollen eine verbesserte Konstruktion einer solchen Vorrichtung sowie ein verbessertes Verfahren für den Betrieb einer solchen Vorrichtung zur Verfügung gestellt werden.

Dieses Ziel der Erfindung wird mit dem Gegenstand des unabhängigen Verfahrensanspruchs erreicht. Merkmale vorteilhafter Weiterbildungen der Erfindung finden sich in den davon abhängigen Ansprüchen. So schlägt die vorliegende Erfindung zur Erreichung des genannten Ziels ein Verfahren zum Greifen, Erfassen, Positionieren, Handhaben, Verschieben, Drehen, Umgruppieren und/oder zum Manipulieren von einzeln, paarweise oder in Gruppen auf einer Horizontalfördereinrichtung transportierten Artikeln, Gebinden oder Stückgütern vor, das mittels einer Handhabungsvorrichtung durchgeführt wird, die einen beweglich an in einem Bewegungsraum oberhalb der Horizontalfördereinrichtung gesteuert bewegbaren Manipulator aufweist, der ein oder mehrere Mittel zum Greifen der Artikel, Gruppierungen, Gebinde oder Stückgüter umfasst. Das Verfahren sieht vor, dass die Bewegungsverläufe zumindest des Manipulator sensorisch und/oder durch Erfassung von Stromaufnahmewerten, Druckwerten und/oder von Weg-Zeit-Verläufen für wenigstens einen Antrieb der Handhabungsvorrichtung überwacht und im Hinblick auf aus den Steuerbefehlen für die Manipulatorbewegungen zu erwartenden Sensor-, Druck- und/oder Stromaufnahmewerten und/oder Weg-Zeit-Zusammenhängen ausgewertet werden. Außerdem ist vorgesehen, dass durch einen Vergleich der Sollwerte mit den erfassten Sensorwerten ein unerwartetes Ereignis im Bewegungs- und/oder Handhabungsverlauf des Manipulators erkannt und/oder hergeleitet wird. Dieses unerwartete Ereignis kann insbesondere eine Kollision des Manipulators mit einem der Artikel einzeln, paarweise oder in Gruppen auf der Horizontalfördereinrichtung innerhalb des Bewegungsraumes des Manipulators transportierten Artikel, Gebinde oder Stückgüter sein, die mittels des Vergleichs der Sensorwerte mit den zu erwartenden Sensor-, Druck- und/oder Stromaufnahmewerten und/oder Weg-Zeit-Zusammenhängen erkannt werden kann. Das unerwartete Ereignis kann jedoch auch ein Schaden am Manipulator oder der Greifeinrichtung sein, bspw. der Verlust einer Greifbacke oder dergleichen. Bei allen solchen Ereignissen ist ein signifikanter Unterschied zwischen den sensorisch erfassten Signalverläufen der Bewegungs-, Spannung-, Druck- etc. -sensoren und den zu erwartenden Signalverläufen erkennbar, die aus den Steuerbefehlen für die Handhabungsvorrichtung bzw. den im Bewegungsraum in mehreren Achsen beweglichen Manipulator der Handhabungsvorrichtung abgeleitet werden können und deshalb grundsätzlich bekannt sind.

Die Handhabungsvorrichtung kann durch einen Portalroboter gebildet oder Teil eines Portalroboters sein, wobei die Bewegungen und/oder Bauteilbeanspruchungen wenigstens eines beweglichen Elements einer Aufhängung des innerhalb des Bewegungsraumes in wenigstens zwei unterschiedlichen Raumachsen beweglichen Manipulators sensorisch erfasst werden. Wahlweise kann die Handhabungsvorrichtung auch durch einen Parallelkinematik-Roboter gebildet oder Teil eines Parallelkinematik-Roboters sein, wobei die Bewegungen und/oder Bauteilbeanspruchungen wenigstens eines beweglichen Elements einer Aufhängung des innerhalb des Bewegungsraumes in wenigstens zwei unterschiedlichen Raumachsen beweglichen Manipulators sensorisch erfasst werden.

Bei Einsatz eines Parallelkinematik-Roboters umfasst dieser zumindest eine obere Aufhängung, an welcher üblicherweise wenigstens drei elektromotorisch angetriebene Stellarme gelenkig befestigt sind, wobei die wenigstens drei Stellarme jeweils aus wenigstens zwei relativ zueinander schwenkbaren Armabschnitten bestehen und unabhängig voneinander betätigt werden können. Der Manipulator, der ein oder mehrere Mittel zum Greifen der Artikel, Gruppierungen, Gebinde oder Stückgüter umfasst, ist mit den wenigstens drei Stellarmen mechanisch gekoppelt, so dass durch eine Bewegung eines oder mehrerer der wenigstens drei Stellarme eine Position des Manipulators vorgegeben werden kann. Zudem weist die Handhabungsvorrichtung wenigstens einen Dehnungssensor auf, der wenigstens einem der Stellarme, dem Manipulator und/oder einem den Manipulator tragenden und an den Stellarmen aufgehängten Werkzeugträger zugeordnet ist, und der dehnungsinduzierte Ausgangssignale generiert und an eine Steuer- und Auswerteschaltung liefert.

Zudem kann die Handhabungsvorrichtung wenigstens einen Drucksensor, einen Beschleunigungssensor, einen Stauchungs- und/oder Spannungssensor oder einen anders funktionierenden Sensor aufweisen, der wenigstens einem der Stellarme, dem Manipulator und/oder einem den Manipulator tragenden und an den Stellarmen aufgehängten Werkzeugträger zugeordnet ist, und der Beschleunigungssignale, Druckwerte, oder längenänderungs- und/oder spannungsinduzierte Ausgangssignale generiert und an eine Steuer- und Auswerteschaltung liefert. Außerdem können auch die Stellbewegungen der Stellarme sensiert werden, bspw. durch Winkelsensoren in deren Antrieb. Schließlich ist es sinnvoll, eine Überwachungseinrichtung zur Erfassung von Antriebsmomenten und/oder Stromaufnahmewerten wenigstens eines der elektromotorischen Antriebe zumindest eines der an der oberen Aufhängung gelenkig befestigten Stellarme vorzusehen. Aus den Ausgangssignalen des wenigstens einen Sensors an der Handhabungsvorrichtung, sei es des Beschleunigungs- oder Drucksensors oder des Dehnungs-, Stauchungs- und/oder Spannungssensors werden zu erwartende Antriebsmomentverläufe für den wenigstens einen elektromotorischen Antrieb errechnet, die permanent oder in definierbaren Zeitabständen mit den aus den Stromaufnahmewerten hergeleiteten tatsächlichen Antriebsmomenten verglichen werden. Darüber hinaus wird aus Abweichungen zwischen den Werten auf ein unerwartetes Ereignis wie bspw. eine Kollision des Manipulators oder dessen Greifeinrichtung mit einem festen oder beweglichen Gegenstand geschlossen. Dadurch, dass bei dem Verfahren die Ausgangssignale des wenigstens einen Druck-, Beschleunigungs-, Dehnungs-, Stauchungs- und/oder Spannungssensors mit aus den Stromaufnahmewerten zumindest des ihm zugeordneten Stellarmantriebs errechneten, zu erwartenden Druck-, Beschleunigungs-, Dehnungs-, Stauchungs- und/oder Spannungswerten verglichen werden, kann aus den Abweichungen zwischen den gemessenen und den errechneten Werten auf eine mechanische Übertragungsgüte und/oder auf einen erhöhten oder reduzierten Widerstand des wenigstens einen überwachten elektromotorischen Antriebs des jeweiligen Stellarms und damit auf eine Kollision oder eine unerwartete Gewichtsreduzierung am Manipulator, bspw. durch Verlust einer Greifbacke oder den Verlust eines aufgenommenen Artikels o. dgl. geschlossen werden.
Bei dem Verfahren werden insbesondere mechanische Kennwerte wenigstens eines beweglichen Elements der Aufhängung der Handhabungsvorrichtung sensorisch erfasst und mit den aus den Steuerbefehlen für die Manipulatorbewegungen im Zeitverlauf zu erwartenden Kennwerten verglichen. Das Verfahren kann vorsehen, dass die Antriebsmomente und/oder die Stromaufnahmewerte des wenigstens einen elektromotorischen Antriebs, dessen an der oberen Aufhängung gelenkig befestigten Stellarms der Sensor zugeordnet ist, permanent während der Stellbewegungen des Stellarms erfasst und ausgewertet werden. Wahlweise können auch die Signale von zwei oder mehr Druck-, Dehnungs-, Stauchungs- und/oder Spannungssensoren ausgewertet werden, die an zwei unterschiedlichen Stellarmen angeordnet sind. Wahlweise können bei dem Verfahren die Beschleunigungen des Manipulators und/oder wenigstens eines beweglichen Elements der Aufhängung der Handhabungsvorrichtung sensorisch erfasst und mit den aus den Steuerbefehlen für die Manipulatorbewegungen im Zeitverlauf zu erwartenden Beschleunigungswerten verglichen werden.

Das Verfahren sieht nicht nur vor, dass die Stromaufnahmewerte wenigstens eines Antriebsmotors der Handhabungsvorrichtung und/oder wenigstens eines von zwei, drei oder mehr Stellarmen des Parallelkinematik-Roboters sensorisch erfasst und mit den aus den Steuerbefehlen für die Manipulatorbewegungen im Zeitverlauf zu erwartenden Stromaufnahmewerten verglichen werden. Außerdem kann es sinnvoll sein, wenn zusätzlich zu den Sensorwerten die Weg-Zeit-Verläufe des wenigstens einen überwachten Antriebs der Handhabungsvorrichtung und/oder des wenigstens einen von zwei, drei oder mehr Stellarmen des Parallelkinematik-Roboters überwacht und ausgewertet und zur Erkennung des unerwarteten Ereignisses im Bewegungs- und/oder Handhabungsverlauf des Manipulators herangezogen werden.

Als Sensoren können bspw. Drucksensoren, Beschleunigungssensoren, Dehnmessstreifen o. dgl. eingesetzt werden. Bei Einsatz von Dehnmessstreifen werden bspw. alle Verformungen des mit einem Dehnmessstreifens ausgestatteten Stellarms bzw. Oberarms erfasst. Die Größe der jeweiligen Verformung ist ein Maß für die radial wirkende Kraft, die als Produkt mit dem Abstand des Hebelarms vom Achsmittelpunkt des Getriebes wirkt, bzw. ein Maß für das Drehmoment, das am Abtrieb des Getriebes aufgebracht werden muss. Bei einer Bewegung mit einem Greifwerkzeug, das eine bestimmte Nutzlast - diese kann bspw. durch ein Gebinde mit Behältern (in der Getränke- und Verpackungsmittelindustrie) gebildet sein - zu bewegen hat, ergibt sich daher für jede Verfahrkurve ein charakteristischer Drehmomentverlauf am Getriebeausgang. Gleichzeitig berechnet die Bewegungs- und Positionssteuerung des Roboters die für diese Aktion notwendigen Stromwerte und damit die notwendigen Antriebsmomente des Motors am Getriebeeingang. Bei einer Beschleunigung einer am Greifwerkzeug zu bewegenden Masse wird das erforderliche Motor-Antriebsdrehmoment aufgrund der Trägheiten des Antriebsstrangs (motoreigenes Trägheitsmoment des Läufers, Trägheitsmoment der Kupplung, Trägheitsmoment des Getriebes) und der Reibung im Getriebe immer zwangsläufig höher sein, als das am Getriebeausgang abgegebene Drehmoment. D.h. bei Vergleich der Kurvenverläufe der Drehmomente ergibt sich normalerweise immer ein zu erwartender Abstand, da das Motordrehmoment immer etwas größer ist als das am Getriebeausgang gelieferte Drehmoment. Dieses zuletzt genannte Drehmoment kann jedoch mittels der Dehnmessstreifen hergeleitet werden, während das Motormoment aus dessen Stromaufnahmeverläufen abgeleitet werden kann.

Da die Trägheiten des Antriebsstranges eine weitgehend unveränderliche Konstante bilden, kann bei einer auffälligen Abweichung des Motordrehmoments im Wesentlichen nur ein unerwartetes Ereignis aufgetreten sein, insbesondere eine Kollision des Greifarmes oder eine sonstige Störung am Greifarm, die sein Gewicht verändert. Sinnvollerweise erfolgt diese Ereignisbestimmung bei einer Überschreitung vorgebbarer Grenzwerte zwischen den zu erwartenden Stromverbrauchssignalen (hergeleitet aus den Signalen des DMS) und den tatsächlichen Stromverbrauchssignalen.

Entsprechende Messungen sind auch mit Beschleunigungssensoren möglich, oder auch mit Drucksensoren, die an sinnvollen Stellen der beweglichen Teile der Handhabungsvorrichtung angebracht sein können.

Bei den durchgeführten Messungen werden vorzugsweise die Motormomente eines charakteristischen Abschnittes einer immer wieder zyklisch durchlaufenen Bewegung mit den Werten der Sensormessung, bspw. der DMS-Messung am Oberarm verglichen. Aus der Veränderung der Messwerte kann nun auf eine Veränderung der Widerstände innerhalb des Bewegungsraumes für den Manipulator geschlossen werden.

Weiterhin kann das Verfahren vorsehen, dass die Signalanalyse und/oder der Vergleich mit dem vorgegebenen Signalmuster zur Auslösung eines ereignisabhängigen Warnsignals und/oder eines ereignisabhängigen Maschinenstopps genutzt werden kann. Diese Variante ist insbesondere dann sinnvoll einzusetzen, wenn die Grenzwerte für einen störungsfreien Betrieb deutlich überschritten werden, so dass auf diese Weise eine kontrollierte Abschaltung im laufenden Betrieb erfolgen kann.

Wie erwähnt, können neben den Ausgangssignalen von optionalen Drucksensoren auch Ausgangssignale von Beschleunigungs- und/oder Schwingungssensoren im Hinblick auf Abweichungen der Stellarmbewegungen von einem vorgebbaren Handhabungs- und/oder Manipulierungsablauf und/oder im Hinblick auf Kollisionen des Manipulators mit Artikeln, Gruppierungen, Gebinden, Stückgütern oder anderen Gegenständen ausgewertet werden. Der wenigstens eine Beschleunigungs- und/oder Schwingungssensor kann Ausgangssignale liefern, die Aufschluss über einen regulären Betrieb des Handhabungssystems oder über ein unerwartetes Ereignis wie z.B. eine Kollision mit einem der zu greifenden Artikel, Gruppierungen, Gebinde oder Stückgüter geben kann. Da eine solche Kollision zu einem in den Stellarmen spürbaren und mittels eines entsprechenden Beschleunigungs- und/oder Schwingungssensors detektierbaren und nachweisbaren Bewegungssignals führt, lassen sich derartige unerwartete Ereignisse mit hoher Zuverlässigkeit erfassen und nachweisen. Zur Erhöhung der Systemzuverlässigkeit kann es sinnvoll sein, die Signale von zwei oder mehr Beschleunigungs- und/oder Schwingungssensoren auszuwerten, die an zwei unterschiedlichen Stellarmen eines Parallelkinematik-Roboters oder an wenigstens einem Stellarm und am Werkzeugträger angeordnet sein können.

Die Ausgangssignale des wenigstens einen Beschleunigungs- und/oder Schwingungssensors werden mittels einer Auswerte- und/oder Rechnereinheit analysiert und/oder mit einem vorgebbaren Signalmuster verglichen. So kann in der Auswerte- und/oder Recheneinheit bspw. ein Kennfeldvergleich stattfinden, bei dem die Signale der Sensoren bzw. des wenigstens einen Sensors ständig mit einem zuvor ermittelten Signalkennfeld verglichen werden, um dadurch Unregelmäßigkeiten und Abweichungen von einem typischen bzw. zu erwartenden Signalverlauf zu erkennen. Das Signalkennfeld kann bspw. in Testläufen ermittelt worden sein, bei dem typische Bewegungsabläufe simuliert wurden, so dass ein Signalmuster gewonnen werden kann, das übliche und kollisionsfreie Bewegungsabläufe abbildet. Derartige typische Signalverläufe können sich auch dazu eignen, Gewichtsanalysen vorzunehmen, um bspw. untypische oder nicht reguläre Gewichtsänderungen zu erkennen, die sich z.B. auf den Verlust eines gegriffenen Artikels, Stückgutes oder Gebindes oder auch auf den Verlust eines Teils des Manipulationswerkzeuges bzw. des am Werkzeugträger angeordneten Greifers zurückführen lässt. Alle solche unerwarteten Ereignisse bilden sich normalerweise im Signalverlauf eines solchen Schwingungs- und/oder Beschleunigungssensor ab und können Rückschlüsse auf Störungen im Handhabungsverlauf der Handhabungsvorrichtung erlauben. So sieht eine für die Praxis besonders sinnvoll einsetzbare Variante des erfindungsgemäßen Verfahrens vor, dass die Signalanalyse und/oder der Vergleich mit dem vorgegebenen Signalmuster zur Kollisionserkennung und/oder zur Erkennung eines Greiffehlers und/oder zur Erkennung eines Verlustes eines gegriffenen Artikels, einer Gruppierung, eines Gebindes oder Stückgutes verwendet wird.

Die Signalanalyse und/oder der Vergleich mit dem vorgegebenen Signalmuster können besonders vorteilhaft zur Auslösung eines ereignisabhängigen Maschinenstopps genutzt werden.

Eine weitere Variante des Verfahrens kann vorsehen, dass die Auswertung und/oder Analyse der Ausgangssignale des wenigstens einen Beschleunigungs- und/oder Schwingungssensors mit einer Analyse der Stromverbrauchssignale der elektrischen Antriebsmotoren oder Getriebemotoren für die Stellarme kombiniert werden kann. Da auch die jeweilige Stromaufnahme der elektrischen Stellmotoren für die Stellarme in einem kombinierten Vergleich gewisse Rückschlüsse über das Auftreten unerwarteter Ereignisse erlaubt, kann eine Kombination der oben genannten Signalauswertung von Beschleunigungs- und/oder Schwingungssensoren mit der Auswertung der Stromverbrauchssignale der Antriebsmotoren noch genauere Erkenntnisse über das Einhalten eines regulären Stellbetriebs der Vorrichtung liefern.

Das oben genannte Ziel der Erfindung wird weiterhin mit dem Gegenstand des unabhängigen Vorrichtungsanspruchs erreicht. Merkmale vorteilhafter Weiterbildungen der Erfindung finden sich in den davon abhängigen Ansprüchen. So schlägt die vorliegende Erfindung zur Erreichung des genannten Ziels eine Handhabungsvorrichtung zum Greifen, Erfassen, Positionieren, Handhaben, Verschieben, Drehen, Umgruppieren und/oder zum Manipulieren von einzeln, paarweise oder in Gruppen auf einer Horizontalfördereinrichtung transportierten Artikeln, Gebinden oder Stückgütern vor. Die Vorrichtung umfasst einen beweglich aufgehängten und in einem Bewegungsraum oberhalb der Horizontalfördereinrichtung gesteuert bewegbaren Manipulator mit einem oder mehreren Mitteln zum Greifen der Artikel, Gruppierungen, Gebinde oder Stückgüter, wobei dem Manipulator und/oder beweglichen Aufhängungsteilen der Vorrichtung, die mit dem Manipulator verbunden sind, und/oder wenigstens einem Antrieb für den Manipulator wenigstens ein Sensor zur Erfassung und/oder Überwachung von Bewegungsverläufen zumindest des Manipulators und/oder zur Erfassung von Stromaufnahmewerten, Druckwerten und/oder von Weg-Zeit-Verläufen für wenigstens einen Antrieb der Handhabungsvorrichtung zugeordnet ist. Außerdem weist die Handhabungsvorrichtung eine Steuer- und Auswerteschaltung auf oder ist mit einer solchen gekoppelt, die aus einer Auswertung der Sensorwerte im Hinblick auf aus den Steuerbefehlen für die Manipulatorbewegungen zu erwartenden Sensor-, Druck- und/oder Stromaufnahmewerten und/oder Weg-Zeit-Zusammenhängen und durch einen Vergleich der Sollwerte mit den erfassten Sensorwerten ein unerwartetes Ereignis im Bewegungs- und/oder Handhabungsverlauf des Manipulators erkennt und/oder herleitet.

Wie oben erwähnt, kann es sich bei der Handhabungsvorrichtung wahlweise um einen Portalroboter handeln oder kann die Handhabungsvorrichtung Teil eines Portalroboters sein, bei dem wenigstens ein bewegliches Element einer Aufhängung mit einem Sensor zur Erfassung der Bewegungen des Elements und/oder von Bauteilbeanspruchungen ausgestattet ist. Ebenso kann es sich bei der Handhabungsvorrichtung auch um einen Parallelkinematik-Roboter handeln, bei dem wenigstens ein bewegliches Elements der Aufhängung mit einem Sensor zur Erfassung der Bewegungen des Elements und/oder von Bauteilbeanspruchungen ausgestattet ist.

Hierbei kann vorgesehen sein, dass der wenigstens eine Sensor die Beschleunigungen des Manipulators und/oder wenigstens eines beweglichen Elements der Aufhängung der Handhabungsvorrichtung sensorisch erfasst, während in der Steuer- und Auswerteschaltung ein Vergleich der Sensorwerte mit den aus den Steuerbefehlen für die Manipulatorbewegungen im Zeitverlauf zu erwartenden Beschleunigungswerten erfolgt. Wahlweise kann auch vorgesehen sein, dass der wenigstens eine Sensor die mechanischen Kennwerte wenigstens eines beweglichen Elements der Aufhängung der Handhabungsvorrichtung sensorisch erfasst, wonach in der Steuer- und Auswerteschaltung ein Vergleich der Sensorwerte mit den aus den Steuerbefehlen für die Manipulatorbewegungen im Zeitverlauf zu erwartenden Beschleunigungswerten erfolgt, woraus bei bestimmten Abweichungen von zu erwartenden Signalmustern auf das Auftreten eines unerwarteten Ereignisses wie insbesondere einer Kollision des Manipulators mit einem beweglichen oder festen Gegenstand geschlossen werden kann.

Die Steuer- und Auswerteschaltung kann vorzugsweise die Stromaufnahmewerte wenigstens eines Antriebsmotors der Handhabungsvorrichtung und/oder wenigstens eines von zwei, drei oder mehr Stellarmen des Parallelkinematik-Roboters protokollieren und/oder sensorisch erfassen, so dass in der Steuer- und Auswerteschaltung ein Vergleich der sensorisch erfassten und/oder protokollierten Stromaufnahmewerte mit den aus den Steuerbefehlen für die Manipulatorbewegungen im Zeitverlauf zu erwartenden Stromaufnahmewerten erfolgen kann, woraus wiederum bei bestimmten Abweichungen von zu erwartenden Signalmustern auf das Auftreten eines unerwarteten Ereignisses wie insbesondere einer Kollision des Manipulators mit einem beweglichen oder festen Gegenstand geschlossen werden kann. Die Auswerte- und/oder Rechnereinheit kann zur Analyse der Ausgangssignale des Sensors oder von mehreren vorhandenen Sensoren und/oder zum Vergleich der Ausgangssignale mit einem vorgebbaren Signalmuster herangezogen werden. Dadurch ist bspw. ein Kennfeldvergleich, eine Gewichtsanalyse des Manipulators bzw. Greifers o. dgl. möglich.

Eine weitere Variante der Handhabungsvorrichtung kann vorsehen, dass die Steuer- und Auswerteschaltung die Weg-Zeit-Verläufe des wenigstens einen überwachten Antriebs der Handhabungsvorrichtung und/oder des wenigstens einen von zwei, drei oder mehr Stellarmen des Parallelkinematik-Roboters überwacht und auswertbar und zur Erkennung des unerwarteten Ereignisses im Bewegungs- und/oder Handhabungsverlauf des Manipulators heranzieht.

Bei einer Ausführungsvariante der Handhabungsvorrichtung als Deltakinematik-Roboter umfasst diese vorzugsweise eine obere Aufhängung, an welcher wenigstens drei separat elektromotorisch angetriebene Stellarme gelenkig befestigt sind, wobei jeder der wenigstens drei Stellarme durch wenigstens zwei relativ zueinander schwenkbare Armabschnitte gebildet ist, und wobei die wenigstens drei Stellarme unabhängig voneinander betätigt werden können. Weiterhin umfasst die Vorrichtung einen Manipulator, welcher ein oder mehrere Mittel zum Greifen der Artikel, Gruppierungen, Gebinde oder Stückgüter umfasst und mit den wenigstens drei Stellarmen mechanisch gekoppelt ist, so dass durch eine Bewegung eines oder mehrerer der wenigstens drei Stellarme eine Position des Manipulators vorgegeben werden kann, sowie wenigstens einen geeigneten Sensor, bspw. einen Beschleunigungs- oder einen Dehnungs-, Stauchungs- und/oder Spannungssensor, der wenigstens einem der Stellarme, dem Manipulator und/oder einem den Manipulator tragenden und an den Stellarmen aufgehängten Werkzeugträger zugeordnet ist, und der beschleunigungs-, dehnungs-, längenänderungs- und/oder spannungsinduzierte Ausgangssignale generiert, und Mittel zur Erfassung von Antriebsmomenten und/oder Stromaufnahmewerten wenigstens eines der elektromotorischen Antriebe zumindest eines der an der oberen Aufhängung gelenkig befestigten Stellearme. Aus den Ausgangssignalen des wenigstens einen Beschleunigungs-, Druck-, Dehnungs-, Stauchungs- und/oder Spannungssensors können aus den Stromaufnahmewerten zu erwartende Beschleunigungs-, Druck-, Dehnungs-, Stauchungs- und/oder Spannungswerte generiert werden, die in einer Auswerte- und/oder Recheneinheit verarbeitet werden können. Aus Abweichungen zwischen den miteinander verglichenen Werten kann eine mechanische Übertragungsgüte und/oder eine Bewegungsabweichung oder ein sonstiges unerwartetes Ereignis abgeleitet werden. Da die Ausgangssignale des wenigstens einen Beschleunigungs- und/oder Schwingungssensors oder auch des Drucksensors oder Dehnmesssensors hinsichtlich Abweichungen von einem vorgebbaren Handhabungs- und/oder Manipulierungsablauf und/oder hinsichtlich Kollisionen des Manipulators mit Artikeln, Gruppierungen, Gebinden, Stückgütern oder anderen Gegenständen auswertbar sind, kann aus dem Vergleich der Werte auf ein unerwartetes Ereignis wie insbesondere eine Kollision geschlossen werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht einer Ausführungsvariante einer erfindungsgemäßen Vorrichtung zur Handhabung und/oder zum Manipulieren von Artikeln, Gruppierungen, Gebinden oder Stückgütern.
Fig. 2 zeigt in drei schematischen Detailansichten (Fig. 2A, Fig. 2B und Fig. 2C) verschiedene Ausführungsvarianten der Vorrichtung gemäß Fig. 1 mit unterschiedlichen Anbringungsorten für Sensoren.
Fig. 3 zeigt in exemplarischer Form den Verlauf der Antriebsdrehmomente bei Stellbewegungen eines der Stellarme der Vorrichtung gemäß Fig. 1.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung sowie das erfindungsgemäße Verfahren ausgestaltet sein können und stellen keine abschließende Begrenzung dar.

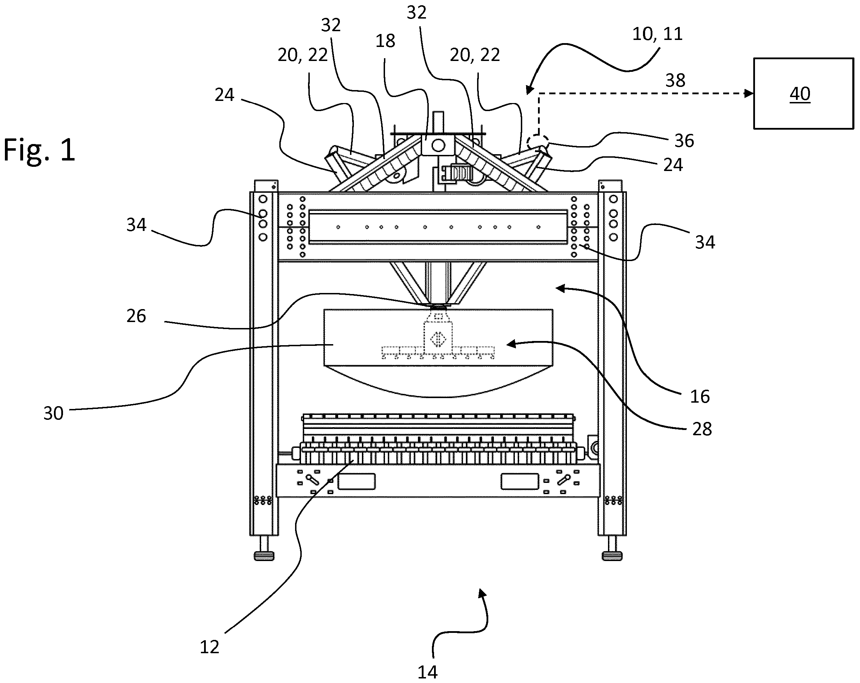

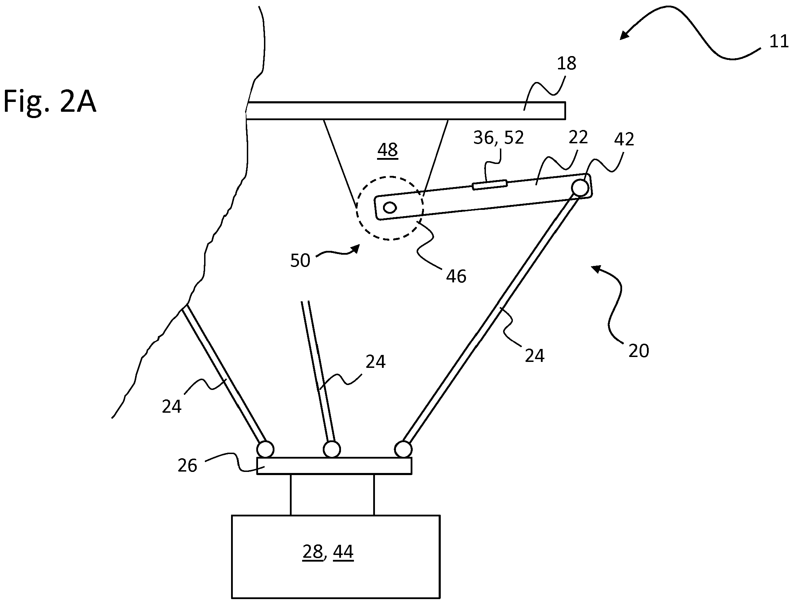

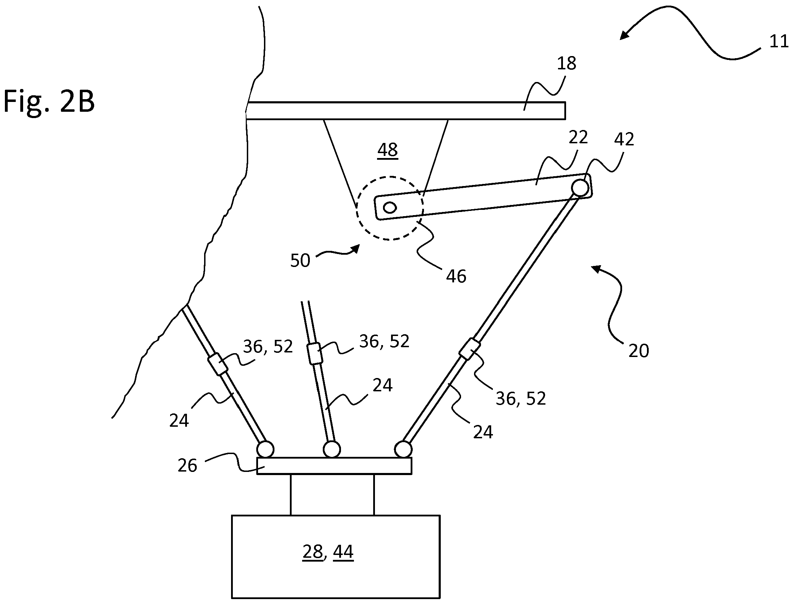

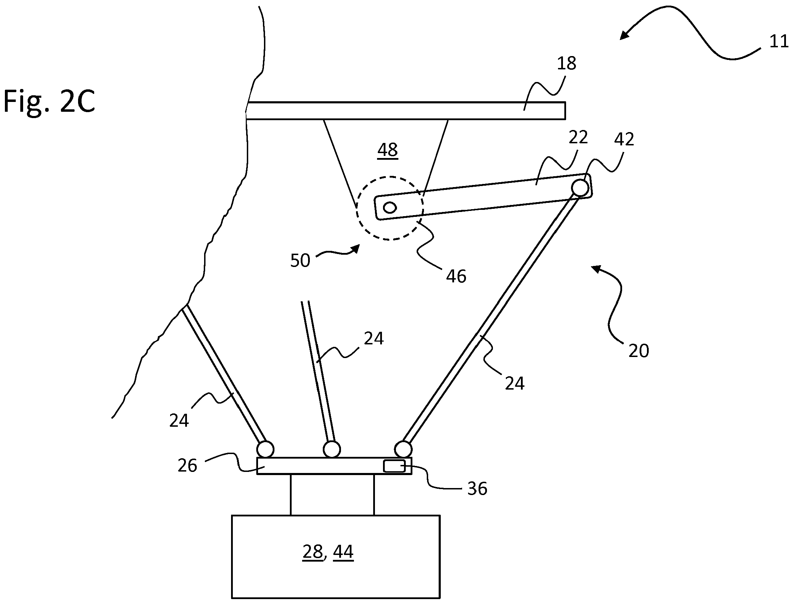

Einleitend sei an dieser Stelle darauf hingewiesen, dass die in den Figuren 1 und 2A bis 2C erläuterten Ausführungsvarianten der erfindungsgemäßen Vorrichtung sich auf einen Deltakinematik-Roboter mit drei gleichartigen Schwenkarmen bzw. auf einen sog. Tripod beziehen, der Teil einer Handhabungseinrichtung bzw. eines Manipulators zur Handhabung, zum Drehen, Verschieben oder Aufnehmen von Artikeln, Stückgütern oder Gebinden ist. Hinsichtlich einer möglichen Ausgestaltung des Deltakinematik-Roboters, Deltaroboters bzw. Tripods, seines Aufbaus, seiner Funktionsweise und seines Bewegungsraumes sei insbesondere auf den Offenbarungsgehalt der DE 10 2013 106 004 A1 verwiesen, auf deren gesamten Inhalt hiermit ausdrücklich Bezug genommen wird. Auf eine detaillierte Beschreibung der Bewegungsmodi, der Antriebe für die drei Schwenkarme etc. soll deshalb an dieser Stelle verzichtet werden. Grundsätzlich könnte die Vorrichtung 10 gemäß Figuren 1 und 2 auch nur zwei (Duopod) oder wahlweise auch vier (Quadpod) oder mehr gleichartige oder unterschiedliche Stellarme aufweisen. Ebenso anwendbar sind die erfinderischen Prinzipien an einer Handhabungsvorrichtung, die einen Portalroboter aufweist oder die Teil eines solchen Portalroboters ist, der typischerweise einen Manipulator mit Greifbacken o. dgl. aufweist, der in einem Rahmengestell beweglich aufgehängt und in drei senkrecht zueinander orientierten Achsen beweglich ist. Die Beweglichkeit des Manipulators oder der Greifeinrichtung definiert einen quaderförmigen Bewegungsraum, während bei einem Tripod typischerweise ein zylindrischer Bewegungsraum mit sich daran nach unten anschließendem Kugelsegment oder ein ähnlich geformter Bewegungsraum entsteht.

Die schematische Seitenansicht der Fig. 1 zeigt eine denkbare Ausgestaltung einer erfindungsgemäßen Handhabungsvorrichtung 10 zum Greifen, Erfassen, Positionieren, Handhaben, Verschieben, Drehen, Umgruppieren und/oder zum Manipulieren von einzeln, paarweise oder in Gruppen auf einer Horizontalfördereinrichtung 12 transportierten Artikeln, Gebinden oder Stückgütern, die jedoch hier nicht dargestellt sind. Diese hier nicht dargestellten Artikel, Gruppierungen, Gebinde oder Stückgüter stehen insbesondere auf einer Auflageebene und/oder einem Förderabschnitt 12 einer größeren Vorrichtung 14 zur Handhabung, Förderung, Gruppierung und/oder Verpackung von Artikeln, Stückgütern, Gruppierungen und/oder Gebinden bzw. werden auf dieser Auflageebene oder dem Förderabschnitt 12 in horizontaler Richtung bewegt, so dass sie die Handhabungsvorrichtung 10 mit gleichmäßiger Fördergeschwindigkeit passieren können.

Im gezeigten Ausführungsbeispiel umfasst die Handhabungsvorrichtung 10 einen Parallelkinematik-Roboter 11, wie dies in den Figuren 2A bis 2C deutlicher erkennbar ist. Ebenso kann die Handhabungsvorrichtung 10 jedoch auch durch einen Portalroboter oder einen Mehrachsroboter gebildet sein.

Die als Greif- und/oder Manipulationseinheit 16 ausgebildete bzw. eine solche aufweisende Handhabungsvorrichtung 10 ist oberhalb der Auflageebene und/oder dem Förderabschnitt der Horizontalfördereinrichtung 12 angeordnet und umfasst eine obere Aufhängung 18, an der drei separat angetriebene Stellarme 20 gelenkig befestigt sind. Jeder dieser drei Stellarme 20 ist durch zwei relativ zueinander schwenkbare Armabschnitte 22 und 24 gebildet, nämlich jeweils durch einen Oberarm 22, der um eine horizontale Schwenkachse beweglich ist und an der oberen Aufhängung 18 gelenkig und motorisch angetrieben aufgehängt ist, sowie durch einen Unterarm 24, der gelenkig mit dem Oberarm 22 verbunden ist und nach unten führt, so dass sich alle drei Unterarme 24 in einem unteren Koppelabschnitt 26 treffen, dem sog. Tool-Center-Point bzw. TCP. An diesem unteren Koppelabschnitt 26 bzw. dem TCP befindet sich eine separat aktivierbare Greifeinrichtung 28 mit einem Paar gegeneinander zustellbarer Greifbacken, die der Erfassung, dem Greifen und/oder Manipulieren der auf dem Förderabschnitt 12 befindlichen Artikel, Gruppierungen, Gebinde oder Stückgüter dienen.

Wie dies bereits im Detail in der DE 10 2013 106 004 A1 beschrieben ist, kann jeder der drei Stellarme 20 unabhängig von den anderen Stellarmen 20 betätigt werden, wodurch sich eine freie Beweglichkeit des Manipulators 16 mitsamt seiner Greifeinrichtung 28 innerhalb eines definierten Bewegungsraumes 30 ergibt, wobei durch eine Bewegung eines oder mehrerer der insgesamt drei Stellarme 20 eine Position der Greifeinrichtung 28 innerhalb des Bewegungsraumes 30 vorgegeben werden kann. Dieser Bewegungs- oder Arbeitsraum 30 ist bezogen auf den Tool-Center-Point 26 in vertikaler Richtung bzw. in z-Richtung ein Zylinder, an dessen unteren Rand sich ein Kugelsegment anschließt, wie dies in Fig. 1 angedeutet ist.

Die obere Aufhängung 18 sieht im gezeigten Ausführungsbeispiel der Fig. 1 eine Abstützung über insgesamt drei schräge Stützträger 32 vor, die sich wiederum in einem Rahmengestell 34 der Vorrichtung 14 zur Handhabung, Förderung, Gruppierung und/oder Verpackung von Artikeln, Stückgütern, Gruppierungen und/oder Gebinden abstützen. Das Rahmengestell 34 kann bspw. ein starrer Stahlträgerrahmen o. dgl. mit verschraubten Vertikal- und Horizontalträgern sein, der im unteren Bereich den Horizontalförderabschnitt 12 aufnimmt.

Die Vorrichtung umfasst außerdem wenigstens einen Sensor 36, der bspw. durch einen Dehnungs-, Stauchungs- und/oder Spannungssensor oder auch durch einen Beschleunigungssensor gebildet sein kann, dessen Lokalisierung an einem der Stellarme 20, am Manipulator 28 und/oder am Tool-Center-Point 26 in der schematischen Darstellung der Fig. 1 lediglich angedeutet sein soll; die Platzierung des wenigstens einen Sensors 36 oder von zwei oder mehr solcher Sensoren 36 sowie ihre bevorzugten Ausführungsvarianten werden anhand der Detaildarstellungen der Figuren 2A bis 2C näher erläutert.

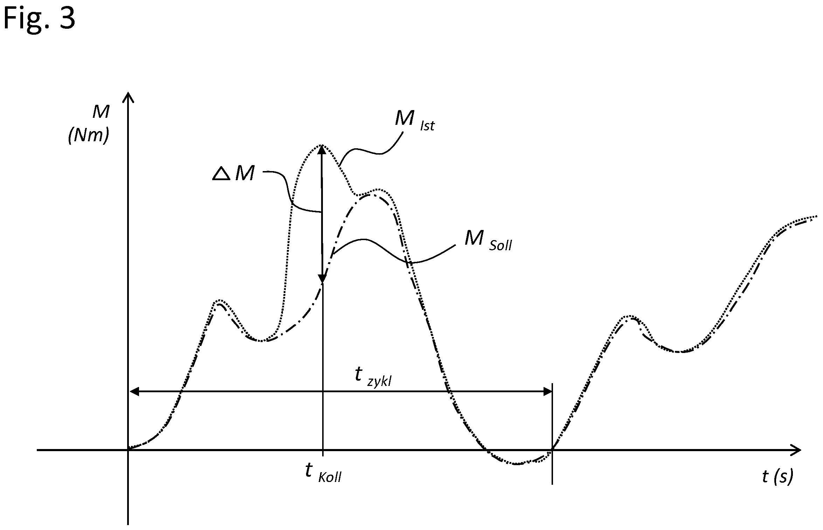

Der wenigstens eine Sensor 36 - dies kann bspw. ein Beschleunigungs-, ein Schwingungssensor, aber auch ein Spannungs- bzw. Dehnungssensor o. dgl. sein - generiert bei jeder Stellbewegung des jeweiligen Stellarms 20, d.h. bei jeder Auf- oder Abbewegung des Oberarms 22 um seine horizontale Schwenkachse beschleunigungs-, dehnungs-, längenänderungs- und/oder spannungsinduzierte Ausgangssignale 38. Diese Ausgangssignale 38 des wenigstens einen Sensors 36 können in einer Auswerte- und/oder Rechnereinheit 40 erfasst und ausgewertet werden, wobei die Auswertung im Hinblick auf zu erwartende Bewegungs-, Beschleunigungs-, Längenänderungs-, Dehnungs- oder Spannungsverläufe erfolgt, wie dies nachfolgend im Detail unter Bezugnahme auf die Figuren 2A bis 2C und Fig. 3 erläutert wird.

Wahlweise können die Ausgangssignale 38 des wenigstens einen Sensors 36 in der Auswerte- und/oder Rechnereinheit 40 auch im Hinblick auf Abweichungen der Stellarmbewegungen von einem vorgebbaren Handhabungs- und/oder Manipulierungsablauf und/oder im Hinblick auf Kollisionen der Greifeinrichtung 28 bzw. des Manipulators 16 mit Artikeln, Gruppierungen, Gebinden, Stückgütern oder anderen Gegenständen ausgewertet werden. Somit kann der wenigstens eine Sensor 36, insbesondere bei einer Ausgestaltung als Beschleunigungs- und/oder Schwingungssensor entsprechende Ausgangssignale 38 liefern, die Aufschluss über einen regulären Betrieb des Handhabungssystems 10 oder über ein unerwartetes Ereignis wie z.B. eine Kollision des Manipulators 16 bzw. der Greifeinrichtung 28 mit einem der zu greifenden Artikel, Gruppierungen, Gebinde oder Stückgüter geben kann. Da eine solche Kollision zu einem in den Stellarmen 20 spürbaren und mittels des wenigstens einen Beschleunigungs- und/oder Schwingungssensors 36 detektierbaren und nachweisbaren Bewegungssignals führt, lassen sich derartige unerwartete Ereignisse mit hoher Zuverlässigkeit erfassen und nachweisen.

Die schematische Teilansicht der Fig. 2A verdeutlicht eine mögliche Ausführungsvariante der erfindungsgemäßen Vorrichtung 10, die hier durch einen Parallelkinematik-Roboter 11 mit drei schematisch angedeuteten Stellarmen 20 gebildet ist, bei dem zumindest ein Sensor 36 an einem der Oberarme 22 angeordnet ist. Sofern der Sensor 36 durch einen Dehnungs-, Stauchungs- und/oder Spannungssensor gebildet ist, kann dieser vorzugsweise parallel zur Längserstreckungsrichtung an der Oberseite eines der Oberarme 22 angeordnet sein. Wie bei allen solchen Parallelkinematik-Robotern 11 bzw. Tripoden sind die Unterarme 24 nicht separat angetrieben, sondern lediglich an den Verbindungsstellen 42 gelenkig mit den freien Enden der Oberarme 22 verbunden. An ihren Unterseiten sind die Unterarme 24 mit dem gemeinsamen Koppelabschnitt bzw. Tool-Center-Point (TCP) 26 gelenkig verbunden bzw. tragen diesen. Der Koppelabschnitt 26 bildet gleichzeitig den Werkzeugträger für die hier nur schematisch angedeutete Greifeinrichtung 28, die bspw. durch zwei gegeneinander zustellbare Greifbacken 44 o. dgl. gebildet sein kann.

Wahlweise kann der Sensor 36 auch an einem der Unterarme 24 (vgl. Fig. 2B) oder am Koppelabschnitt 26 bzw. am Werkzeugträger (vgl. Fig. 2C) angeordnet sein, wobei sich diese Positionierungen besser für den Einsatz von Beschleunigungssensoren eignen, während der erwähnte Dehnungs-, Stauchungs- und/oder Spannungssensor am Oberarm aussagekräftigere Signale 38 (vgl. Fig. 1) liefert als bspw. bei einer Anbringung am Werkzeugträger 26.

Die Oberarme 22, von denen in der Detailansicht der Figuren 2A bis 2C der besseren Übersichtlichkeit halber nur einer gezeigt ist, sind jeweils an der oberen Aufhängung 18 gehalten und um eine horizontale Drehachse verschwenkbar in einem oberen Aufhängungspunkt 46 gelagert. Um die Verschwenkbarkeit des Oberarms 22 am oberen Aufhängungspunkt 46 um eine horizontale Drehachse zu ermöglichen, ist an einem Lagerbock 48 der oberen Aufhängung 18 ein hier nicht detailliert gezeigter Antrieb 50 vorgesehen, der insbesondere durch einen elektrischen Antriebsmotor mit angeflanschtem Getriebe gebildet sein kann, der für die schnellen Stellbewegungen des Oberarms 22 und damit des gesamten Gelenkarmes 20 sorgen kann. Jeder der vorhandenen drei Gelenkarme 20 ist mit jeweils einem solchen Getriebemotor 50 versehen, wobei die Gelenkarme 20 durch die separate Ansteuerbarkeit der Getriebemotoren 50 jeweils eigene Stellbewegungen ausführen können, wodurch sich die Bewegungsmöglichkeiten der Greifeinrichtung 28 im vorhandenen Bewegungsraum 30 (vgl. Fig. 1) ergeben.

Wie es die schematische Detailansicht der Fig. 2A andeutet, kann einer der Oberarme 22 den gezeigten Sensor 36, so bspw. einen Beschleunigungs-, Dehnungs-, Stauchungs- und/oder Spannungssensor aufweisen, der seine Ausgangssignale 38 gemäß Fig. 1 an die Auswerte- und/oder Rechnereinheit 40 liefert. Vorzugsweise jedoch können mindestens zwei oder im Idealfall alle drei Oberarme 22 jeweils mit separaten Sensoren 36 ausgestattet sein, die ihre Ausgangssignale 38 jeweils an die Auswerte- und/oder Rechnereinheit 40 liefern, welche aus den Signalen Informationen über einen regulären Betrieb der Vorrichtung 10 oder über das Auftreten von unerwarteten Ereignissen wie insbesondere von Kollisionen der Greifeinrichtung 28 bzw. deren Greifbacken 44 gewinnen kann.

Die schematische Teilansicht der Fig. 2B verdeutlicht eine weitere Ausführungsvariante der erfindungsgemäßen Vorrichtung 10 bzw. des in Fig. 2A bereits angedeuteten Parallelkinematik-Roboters 11, bei dem jeweils ein Sensor 36, wiederum z.B. gebildet durch einen Dehnungssensor, einen Beschleunigungs- und/oder Schwingungssensor, an zumindest einem der Unterarme 24, ggf. auch an jedem der Unterarme 24 angeordnet ist.

Darüber hinaus zeigt die Variante gemäß Fig. 2C eine weitere alternative Anbringungsmöglichkeit eines Beschleunigungs- und/oder Schwingungssensors 36 am Werkzeugträger bzw. am Tool-Center-Point 26.

Denkbar sind darüber hinaus Kombinationen der in den Figuren 2A bis 2C gezeigten Anbringungsvarianten von Sensoren 36, die bspw. auch an den Oberarmen 22 und den Unterarmen 24 und/oder am Werkzeugträger bzw. am Tool-Center-Point angeordnet sein können.

Wie dies die Darstellung der Fig. 3 verdeutlicht, werden aus den Ausgangssignalen 38 des wenigstens einen Sensors 36 zu erwartende Antriebsmomentverläufe für den wenigstens einen elektromotorischen Antrieb 50 bzw. den Getriebemotor 50 (vgl. Figuren 2A bis 2C) errechnet, die permanent oder in definierbaren Zeitabständen mit den aus den Stromaufnahmewerten hergeleiteten tatsächlichen Antriebsmomenten verglichen werden. Darüber hinaus wird aus Abweichungen zwischen den Werten auf eine mechanische Übertragungsgüte und/oder auf ein unerwartetes Ereignis wie eine Kollision geschlossen, wenn zumindest einer der Motoren 50 andere Stromverbrauchswerte zeigt als dies aus dem normalen Bewegungsverlauf zu erwarten wäre.

Als Sensoren 36 lassen sich bspw. Dehnungsmessstreifen 52 (DMS) einsetzen, die als dünne Foliensensoren bspw. mittels Haftklebern auf die Oberarme 22 der Stellarme 20 aufgebracht werden, um deren Verformungsverhalten in exakt reproduzierbare Ausgangssignale 38 umzuwandeln (vgl. Fig. 2A und Fig. 2B). Als Messprinzip für die eingesetzten Sensoren 36 eignet sich insbesondere eine Widerstandsmessung. Damit kann die dehnende bzw. stauchende Verformung des jeweiligen Oberarms 22 erfasst und in Ausgangssignale 38 bzw. in veränderliche ohmsche Widerstandswerte umgewandelt werden. Die Ausgangssignale 38 des wenigstens einen Sensors 36 bzw. des Dehnungsmessstreifens 52 werden mittels der Auswerte- und/oder Rechnereinheit 40 analysiert und/oder mit einem vorgebbaren bzw. zu erwartenden Signalmuster verglichen.

Beim Einsatz von Dehnmessstreifen 52 als Sensoren werden deren Ausgangssignale 38 erfasst und in der Auswerte- und/oder Rechnereinheit 40 analysiert und mit Signalverläufen verglichen, die aus dem typischen Bewegungsablauf der Greifeinheit 28 der Handhabungsvorrichtung 10 zu erwarten wären. Dieser zu erwartende Drehmomentverlauf M_{Soll} eines der Antriebsmotoren 50 ist in Fig. 3 als strichpunktierte Kurve auf einem Zeit-Momenten-Diagramm dargestellt. Der Kurvenverlauf wiederholt sich normalerweise immer wieder über mehrere Zyklen. In Fig. 3 ist einer dieser Zyklen (t_{zykl}) dargestellt. Da es für den Drehmomentverlauf nicht nur den erwarteten Verlauf M_{Soll} gibt, sondern auch Abweichungen davon möglich sind, die mittels des wenigstens einen Sensors 36 gemessen und aus den Ausgangssignalen 38 des Sensors 36 errechnet werden, können in der Realität abweichende Kurvenverläufe mit ausgeprägten Drehmomentspitzen auftreten, wie sie beispielhaft in der Fig. 3 anhand eines gemessenen Drehmomentverlaufs M_{Ist} angedeutet ist (feinpunktierte Linie).

Zur Ermittlung der Kurven M_{Ist} können bspw. alle Verformungen des mit einem Dehnmessstreifens 52 ausgestatteten Stellarms 20 bzw. Oberarms 22 erfasst werden. Die Größe der jeweiligen Verformung ist ein Maß für die radial wirkende Kraft, die als Produkt mit dem Abstand des Hebelarms vom Achsmittelpunkt des Getriebes wirkt, bzw. ein Maß für das Drehmoment, das am Abtrieb des Getriebes aufgebracht werden muss. Bei einer Bewegung mit einem Greifwerkzeug 44, das eine bestimmte Nutzlast - diese kann bspw. durch ein Gebinde mit Behältern gebildet sein - zu bewegen hat, ergibt sich daher für jede Verfahrkurve ein charakteristischer Drehmomentverlauf (M_{Soll}) am Getriebeausgang. Gleichzeitig berechnet die Bewegungs- und Positionssteuerung des Roboters bzw. der Handhabungsvorrichtung 10 die für diese Aktion notwendigen Stromwerte und damit die notwendigen Antriebsmomente des Motors am Getriebeeingang.

Somit ergibt sich beim Vergleich der Kurvenverläufe der Drehmomente (M_{Soll} und M_{Ist}) normalerweise immer ein zu erwartender sehr kleiner Abstand, der erst bei einer Störung durch eine Kollision oder ein anderes unerwartetes Ereignis deutlich überschritten wird, so dass bspw. zu bei einer Kollision der Greifeinheit 28 zu einem bestimmten Zeitpunkt (t_{Koll}) ein deutlich größerer Abstand (ΔM) auftreten kann. Das tatsächliche Drehmoment kann wahlweise mittels der Dehnmessstreifen 52, mittels Beschleunigungssensoren (hier nicht gezeigt), aber auch aus den Stromaufnahmeverläufen für den Antriebsmotor 50 bzw. die Antriebsmotoren 50 abgeleitet werden. Dabei können sinnvollerweise die Motormomente eines charakteristischen Abschnittes einer immer wieder zyklisch durchlaufenen Bewegung mit den Werten der DMS-Messung am Oberarm verglichen werden. So zeigt die Fig. 3 bspw. einen kompletten Bewegungszyklus, kenntlich gemacht durch die Zyklusdauer t_{zykl}.

Weiterhin kann das Verfahren vorsehen, dass die Signalanalyse und/oder der Vergleich mit dem vorgegebenen Signalmuster zur Auslösung eines ereignisabhängigen Warnsignals und/oder eines ereignisabhängigen Maschinenstopps genutzt werden kann. Diese Variante ist insbesondere dann sinnvoll einzusetzen, wenn die Manipulationseinheit nicht mehr sinnvoll eingesetzt werden kann, so wie dies z.B. bei Verlust einer Greifbacke 44 der Greifeinrichtung 28 der Fall sein kann, so dass ein kontrollierter Stopp im laufenden Betrieb ermöglicht ist, ohne dass es zu weiteren Störungen im Betriebsablauf durch Weiterverwendung der nicht mehr einsatzfähigen Greifeinrichtung 28 kommen muss.

Die Erfindung wurde unter Bezugnahme auf die in den Figuren 1 bis 3 gezeigte bevorzugte Ausführungsvariante beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

10 Vorrichtung, Handhabungsvorrichtung
11 Parallelkinematik-Roboter
12 Förderabschnitt, Horizontalförderabschnitt, Horizontalfördereinrichtung
14 Vorrichtung, Handhabungs-, Förder-, Gruppierungs-, Verpackungsvorrichtung
16 Greifeinheit, Manipulationseinheit, Manipulator
18 obere Aufhängung
20 Stellarm
22 Oberarm, oberer Armabschnitt
24 Unterarm, unterer Armabschnitt
26 Koppelabschnitt, Tool-Center-Point (TCP), Werkzeugträger
28 Greifeinrichtung, Manipulator
30 Bewegungsraum, Arbeitsraum
32 Stützträger
34 Rahmengestell, Rahmen
36 Sensor
38 Ausgangssignal
40 Auswerte- und/oder Rechnereinheit, Steuer- und Auswerteschaltung
42 Verbindungsstelle, Gelenk (zwischen Oberarmen und Unterarmen)
44 Greifbacken (der Greifeinrichtung), Mittel zum Greifen
46 oberer Aufhängungspunkt (der Oberarme)
48 Lagerbock
50 Motor, Antriebsmotor, elektromotorischer Antrieb, Getriebemotor
52 Dehnungsmessstreifen, DMS

## Patentansprüche

1. Verfahren zum Greifen, Erfassen, Positionieren, Handhaben, Verschieben, Drehen, Umgruppieren und/oder zum Manipulieren von einzeln, paarweise oder in Gruppen auf einer Horizontalfördereinrichtung (12) transportierten Artikeln, Gebinden oder Stückgütern, mit einer Handhabungsvorrichtung (10), die einen beweglich aufgehängten und in einem Bewegungsraum (30) oberhalb der Horizontalfördereinrichtung (12) gesteuert bewegbaren Manipulator (28) aufweist, der ein oder mehrere Mittel (44) zum Greifen der Artikel, Gruppierungen, Gebinde oder Stückgüter umfasst, wobei die Bewegungsverläufe zumindest des Manipulators (28) sensorisch und/oder durch Erfassung von Stromaufnahmewerten, Druckwerten und/oder von Weg-Zeit-Verläufen für wenigstens einen Antrieb (50) der Handhabungsvorrichtung (10) überwacht und im Hinblick auf aus den Steuerbefehlen für die Manipulatorbewegungen zu erwartenden Sensor-, Druck- und/oder Stromaufnahmewerten und/oder Weg-Zeit-Zusammenhängen ausgewertet werden, und wobei durch einen Vergleich der Sollwerte mit den erfassten Sensorwerten ein unerwartetes Ereignis im Bewegungs- und/oder Handhabungsverlauf des Manipulators (28) erkannt und/oder hergeleitet wird,
**dadurch gekennzeichnet dass**
wenigstens ein Dehnungssensor, insbesondere ein Dehnungsmessstreifen (52), dehnungsinduzierte Ausgangssignale (38) generiert und an eine Steuer- und Auswerteschaltung (40) liefert,
welcher Manipulator (28) durch einen Parallelkinematik-Roboter (11) oder Tripoden mit mindestens drei Stellarmen (20) gebildet wird, welche jeweils aus wenigstens zwei relativ zueinander schwenkbaren Armabschnitten (22, 24) bestehen und unabhängig voneinander betätigt werden können,
welcher Dehnungssensor wenigstens einem der Stellarme (20) des Manipulators (28), dem Manipulator (28) und/oder einem den Manipulator (28) tragenden und an den Stellarmen (20) des Manipulators (28) aufgehängten Werkzeugträger (26) zugeordnet ist und
welcher Dehnungssensor dehnungsinduzierte Ausgangssignale generiert und an eine Steuer- und Auswerteschaltung (40) liefert.

2. Verfahren nach Anspruch 1, bei dem die Handhabungsvorrichtung (10) durch einen Portalroboter gebildet oder Teil eines Portalroboters ist, wobei die Bewegungen und/oder Bauteilbeanspruchungen wenigstens eines beweglichen Elements einer Aufhängung des innerhalb des Bewegungsraumes (30) in wenigstens zwei unterschiedlichen Raumachsen beweglichen Manipulators (28) sensorisch erfasst werden.

3. Verfahren nach Anspruch 1, bei dem die Handhabungsvorrichtung (10) durch einen Parallelkinematik-Roboter gebildet oder Teil eines Parallelkinematik-Roboters ist, wobei die Bewegungen und/oder Bauteilbeanspruchungen wenigstens eines beweglichen Elements einer Aufhängung des innerhalb des Bewegungsraumes (30) in wenigstens zwei unterschiedlichen Raumachsen beweglichen Manipulators (28) sensorisch erfasst werden.

4. Verfahren nach Anspruch 2 oder 3, bei dem die Beschleunigungen des Manipulators (28) und/oder wenigstens eines beweglichen Elements der Aufhängung der Handhabungsvorrichtung (10) sensorisch erfasst und mit den aus den Steuerbefehlen für die Manipulatorbewegungen im Zeitverlauf zu erwartenden Beschleunigungswerten und/oder mit einem vorgebbaren Signalmuster verglichen werden.

5. Verfahren nach Anspruch 2 oder 3, bei dem mechanische Kennwerte wenigstens eines beweglichen Elements der Aufhängung der Handhabungsvorrichtung (10) sensorisch erfasst und mit den aus den Steuerbefehlen für die Manipulatorbewegungen im Zeitverlauf zu erwartenden Kennwerten und/oder mit einem vorgebbaren Signalmuster verglichen werden.

6. Verfahren nach Anspruch 2 oder 3, bei dem die Stromaufnahmewerte wenigstens eines Antriebsmotors (50) der Handhabungsvorrichtung (10) und/oder wenigstens eines von zwei, drei oder mehr Stellarmen (20) des Parallelkinematik-Roboters sensorisch erfasst und mit den aus den Steuerbefehlen für die Manipulatorbewegungen im Zeitverlauf zu erwartenden Stromaufnahmewerten und/oder mit einem vorgebbaren Signalmuster verglichen werden.

7. Verfahren nach einem der Ansprüche 4 bis 6, bei dem zusätzlich zu den Sensorwerten die Weg-Zeit-Verläufe des wenigstens einen überwachten Antriebs (50) der Handhabungsvorrichtung (10) und/oder des wenigstens einen von zwei, drei oder mehr Stellarmen (20) des Parallelkinematik-Roboters überwacht und ausgewertet und zur Erkennung des unerwarteten Ereignisses im Bewegungs- und/oder Handhabungsverlauf des Manipulators (28) herangezogen werden.

8. Verfahren nach einem der Ansprüche 4 bis 7, bei die Signalanalyse und/oder der Vergleich mit dem vorgegebenen Signalmuster zur Auslösung eines ereignisabhängigen Maschinenstopps genutzt wird.

9. Handhabungsvorrichtung (10) zum Greifen, Erfassen, Positionieren, Handhaben, Verschieben, Drehen, Umgruppieren und/oder zum Manipulieren von einzeln, paarweise oder in Gruppen auf einer Horizontalfördereinrichtung (12) transportierten Artikeln, Gebinden oder Stückgütern, welche Handhabungsvorrichtung (10) einen beweglich aufgehängten und in einem Bewegungsraum (30) oberhalb der Horizontalfördereinrichtung (12) gesteuert bewegbaren Manipulator (28) mit einem oder mehreren Mitteln (44) zum Greifen der Artikel, Gruppierungen, Gebinde oder Stückgüter umfasst, wobei dem Manipulator (28) und/oder beweglichen Aufhängungsteilen der Vorrichtung (10), die mit dem Manipulator (28) verbunden sind, und/oder wenigstens einem Antrieb (50) für den Manipulator (28) wenigstens ein Sensor (36) zur Erfassung und/oder Überwachung von Bewegungsverläufen zumindest des Manipulators (28) und/oder zur Erfassung von Stromaufnahmewerten, Druckwerten und/oder von Weg-Zeit-Verläufen für wenigstens einen Antrieb (50) der Handhabungsvorrichtung (10) zugeordnet ist, und wobei die Handhabungsvorrichtung (10) eine Steuer- und Auswerteschaltung (40) aufweist oder mit einer solchen gekoppelt ist, die aus einer Auswertung der Sensorwerte (38) im Hinblick auf aus den Steuerbefehlen für die Manipulatorbewegungen zu erwartenden Sensor-, Druck- und/oder Stromaufnahmewerten und/oder Weg-Zeit-Zusammenhängen und durch einen Vergleich der Sollwerte mit den erfassten Sensorwerten (38) ein unerwartetes Ereignis im Bewegungs- und/oder Handhabungsverlauf des Manipulators (28) erkennt und/oder herleitet,
**dadurch gekennzeichnet dass**
die Handhabungsvorrichtung (10) wenigstens ein Dehnungssensor aufweist, insbesondere ein Dehnungsmessstreifen (52), der wenigstens einem der Stellarme (20), dem Manipulator (28) und/oder einem den Manipulator (28) tragenden und an den Stellarmen (20) aufgehängten Werkzeugträger zugeordnet ist,
welcher Manipulator (28) durch einen Parallelkinematik-Roboter (11) oder Tripoden mit mindestens drei Stellarmen (20) gebildet wird, welche jeweils aus wenigstens zwei relativ zueinander schwenkbaren Armabschnitten (22, 24) bestehen und unabhängig voneinander betätigt werden können,
welcher Dehnungssensor wenigstens einem der Stellarme (20) des Manipulators (28), dem Manipulator (28) und/oder einem den Manipulator (28) tragenden und an den Stellarmen (20) des Manipulators (28) aufgehängten Werkzeugträger (26) zugeordnet ist und
welcher Dehnungssensor dehnungsinduzierte Ausgangssignale generiert und an eine Steuer- und Auswerteschaltung (40) liefert.

10. Handhabungsvorrichtung (10) nach Anspruch 9, die durch einen Portalroboter gebildet oder Teil eines Portalroboters ist, bei dem wenigstens ein bewegliches Element einer Aufhängung mit einem Sensor (36) zur Erfassung der Bewegungen des Elements und/oder von Bauteilbeanspruchungen ausgestattet ist.

11. Handhabungsvorrichtung (10) nach Anspruch 9, die durch einen Parallelkinematik-Roboter gebildet oder Teil eines Parallelkinematik-Roboters ist, bei dem wenigstens ein bewegliches Element der Aufhängung mit einem Sensor (36) zur Erfassung der Bewegungen des Elements und/oder von Bauteilbeanspruchungen ausgestattet ist.

12. Handhabungsvorrichtung (10) nach Anspruch 10 oder 11, bei der der wenigstens eine Sensor (36) die Beschleunigungen des Manipulators (28) und/oder wenigstens eines beweglichen Elements der Aufhängung der Handhabungsvorrichtung (10) sensorisch erfasst, und bei der in der Steuer- und Auswerteschaltung (40) ein Vergleich der Sensorwerte (38) mit den aus den Steuerbefehlen für die Manipulatorbewegungen im Zeitverlauf zu erwartenden Beschleunigungswerten erfolgt.

13. Handhabungsvorrichtung (10) nach Anspruch 10 oder 11, bei der der wenigstens eine Sensor (36) die mechanische Kennwerte wenigstens eines beweglichen Elements der Aufhängung der Handhabungsvorrichtung (10) sensorisch erfasst, und bei der in der Steuer- und Auswerteschaltung (40) ein Vergleich der Sensorwerte (38) mit den aus den Steuerbefehlen für die Manipulatorbewegungen im Zeitverlauf zu erwartenden Beschleunigungswerten erfolgt.

14. Handhabungsvorrichtung (10) nach Anspruch 10 oder 11, bei der die Steuer- und Auswerteschaltung (40) die Stromaufnahmewerte wenigstens eines Antriebsmotors (50) der Handhabungsvorrichtung (10) und/oder wenigstens eines von zwei, drei oder mehr Stellarmen (20) des Parallelkinematik-Roboters protokolliert und/oder sensorisch erfasst, und wobei in der Steuer- und Auswerteschaltung (40) ein Vergleich der sensorisch erfassten und/oder protokollierten Stromaufnahmewerte mit den aus den Steuerbefehlen für die Manipulatorbewegungen im Zeitverlauf zu erwartenden Stromaufnahmewerten erfolgt.

15. Handhabungsvorrichtung (10) nach einem der Ansprüche 12 bis 14, bei der die Steuer- und Auswerteschaltung (40) die Weg-Zeit-Verläufe des wenigstens einen überwachten Antriebs (50) der Handhabungsvorrichtung (10) und/oder des wenigstens einen von zwei, drei oder mehr Stellarmen (20) des Parallelkinematik-Roboters überwacht und auswertbar und zur Erkennung des unerwarteten Ereignisses im Bewegungs- und/oder Handhabungsverlauf des Manipulators (28) heranzieht.

## Claims

1. A method for gripping, seizing, positioning, handling, shifting, rotating, regrouping, and/or manipulating articles, packs, or piece goods being transported individually, pairwise, or in groups on a horizontal conveyor (12), with a handling device (10) having a manipulator (28) movably suspended and controllably movable in a movement range (30) above the horizontal conveyor (12), which manipulator (28) comprises one or more means (44) for gripping the articles, groupings, packs, or piece goods, wherein the movement profiles of at least the manipulator (28) are sensor-monitored and/or monitored by detection of current consumption values, pressure values, and/or of path-time curves for at least one drive (50) of the handling device (10), and are evaluated with regard to sensor values, pressure values, and/or current consumption values and/or path-time relations to be expected from the control commands for the manipulator movements, and wherein an unexpected event in the movement profile and/or handling profile of the manipulator (28) is identified and/or derived by a comparison of the target values with the detected sensor values, **characterised in that**
at least one strain sensor, in particular, a strain gauge (52), generates strain-induced output signals (38) and provides the output signals (38) to a control and evaluation circuit (40),
which manipulator (28) is formed by a parallel kinematic robot (11) or by a tripod with at least three positioning arms (20), which are each made up of at least two arm sections (22, 24) that are swivelable relative to one another and that can be operated independently of one another,
which strain sensor is assigned to at least one of the positioning arms (20) of the manipulator (28), to the manipulator (28), and/or to a tool carrier (26) carrying the manipulator (28) and suspended from the positioning arms (20) of the manipulator (28), and
which strain sensor generates strain-induced output signals and provides the output signals to a control and evaluation circuit (40).

2. The method according to claim 1, in which the handling device (10) is formed by a gantry robot or is part of a gantry robot, wherein the movements and/or the component stresses of at least one movable element of a suspension of the manipulator (28) that is movable in at least two different spatial axes within the movement range (30) are sensor-detected.

3. The method according to claim 1, in which the handling device (10) is formed by a parallel kinematic robot or is part of a parallel kinematic robot, wherein the movements and/or the component stresses of at least one movable element of a suspension of the manipulator (28) that is movable in at least two different spatial axes within the movement range (30) are sensor-detected.

4. The method according to claim 2 or 3, in which the accelerations of the manipulator (28) and/or of at least one movable element of the suspension of the handling device (10) are sensor-detected and compared with the acceleration values to be expected over the course of time from the control commands for the manipulator movements and/or compared with a specifiable signal pattern.

5. The method according to claim 2 or 3, in which mechanical characteristic values of at least one movable element of the suspension of the handling device (10) are sensor-detected and compared with the characteristic values to be expected over the course of time from the control commands for the manipulator movements and/or compared with a specifiable signal pattern.

6. The method according to claim 2 or 3, in which the current consumption values of at least one drive motor (50) of the handling device (10) and/or of at least one of two, three, or more positioning arms (20) of the parallel kinematic robot are sensor-detected and compared with the current consumption values to be expected over the course of time from the control commands for the manipulator movements and/or compared with a specifiable signal pattern.

7. The method according to one of the claims 4 to 6, in which, in addition to the sensor values, the path-time curves of the at least one monitored drive (50) of the handling device (10) and/or of the at least one of two, three, or more positioning arms (20) of the parallel kinematic robot are monitored and evaluated and used for the identification of the unexpected event in the movement profile and/or handling profile of the manipulator (28).

8. The method according to one of the claims 4 to 7, in which the signal analysis and/or the comparison with the specified signal pattern is used as a trigger for an event-dependent machine stop.

9. A handling device (10) for gripping, seizing, positioning, handling, shifting, rotating, regrouping, and/or manipulating articles, packs, or piece goods being transported individually, pairwise, or in groups on a horizontal conveyor (12), which handling device (10) comprises a manipulator (28) that is movably suspended and controllably movable in a movement range (30) above the horizontal conveyor (12), the manipulator (28) having one or more means (44) for gripping the articles, groupings, packs, or piece goods, wherein at least one sensor (36) for detecting and/or monitoring movement profiles of at least the manipulator (28) and/or for detecting current consumption values, pressure values, and/or of path-time curves for at least one drive (50) of the handling device (10), is assigned to the manipulator (28) and/or to movable suspension parts of the device (10) connected to the manipulator (28) and/or to at least one drive (50) for the manipulator (28), and wherein the handling device (10) has a control and evaluation circuit (40) or is coupled with such a control and evaluation circuit (40), which, from an evaluation of the sensor values (38) with regard to sensor values, pressure values, and/or current consumption values and/or path-time relations to be expected from the control commands for the manipulator movements, and by a comparison of the target values with the detected sensor values (38), identifies and/or derives an unexpected event in the movement profile and/or handling profile of the manipulator (28),
**characterised in that**
the handling device (10) has at least one strain sensor, in particular, a strain gauge (52), which is assigned to at least one of the positioning arms (20), to the manipulator (28), and/or to a tool carrier carrying the manipulator (28) and suspended from the positioning arms (20),
which manipulator (28) is formed by a parallel kinematic robot (11) or by a tripod with at least three positioning arms (20), which are each made up of at least two arm sections (22, 24) that are swivelable relative to one another and that can be operated independently of one another,
which strain sensor is assigned to at least one of the positioning arms (20) of the manipulator (28), to the manipulator (28), and/or to a tool carrier (26) carrying the manipulator (28) and suspended from the positioning arms (20) of the manipulator (28), and
which strain sensor generates strain-induced output signals and provides the output signals to a control and evaluation circuit (40).

10. The handling device (10) according to claim 9, which is formed by a gantry robot or is part of a gantry robot, in which at least one movable element of a suspension is equipped with a sensor (36) for detecting the movements of the element and/or for detecting component stresses.

11. The handling device (10) according to claim 9, which is formed by a parallel kinematic robot or is part of a parallel kinematic robot, in which at least one movable element of the suspension is equipped with a sensor (36) for detecting the movements of the element and/or for detecting component stresses.

12. The handling device (10) according to claim 10 or 11, in which the at least one sensor (36) sensor-detects the accelerations of the manipulator (28) and/or of at least one movable element of the suspension of the handling device (10), and in which a comparison is carried out in the control and evaluation circuit (40) to compare the sensor values (38) with the acceleration values to be expected over the course of time from the control commands for the manipulator movements.

13. The handling device (10) according to claim 10 or 11, in which the at least one sensor (36) sensor-detects the mechanical characteristic values of at least one movable element of the suspension of the handling device (10), and in which a comparison is carried out in the control and evaluation circuit (40) to compare the sensor values (38) with the acceleration values to be expected over the course of time from the control commands for the manipulator movements.

14. The handling device (10) according to claim 10 or 11, in which the control and evaluation circuit (40) logs and/or sensor-detects the current consumption values of at least one drive motor (50) of the handling device (10) and/or of at least one of two, three, or more positioning arms (20) of the parallel kinematic robot, and wherein a comparison is carried out in the control and evaluation circuit (40) to compare the sensor-detected and/or logged current consumption values with the current consumption values to be expected over the course of time from the control commands for the manipulator movements.

15. The handling device (10) according to one of the claims 12 to 14, in which the control and evaluation circuit (40) monitors and evaluates the path-time curves of the at least one monitored drive (50) of the handling device (10) and/or of the at least one of two, three, or more positioning arms (20) of the parallel kinematic robot, and uses them for the identification of the unexpected event in the movement profile and/or handling profile of the manipulator (28)

## Revendications

1. Procédé pour saisir, prendre, positionner, manier, déplacer, tourner, regrouper et/ou manipuler des articles, multipacks ou produits de détail transportés individuellement, par paires ou en groupes sur un dispositif de transport horizontal (12), comprenant un dispositif de manipulation (10) qui présente un manipulateur (28) qui est suspendu de manière mobile et peut être déplacé de manière commandée dans un espace de mouvement (30) au-dessus du dispositif de transport horizontal (12) et qui comprend un ou plusieurs moyens (44) pour saisir les articles, groupements, multipacks ou produits de détail, dans lequel les déroulements de mouvement au moins du manipulateur (28) sont surveillés par capteur et/ou en saisissant des valeurs de consommation de courant, des valeurs de pression et/ou des courbes trajet-temps pour au moins un entraînement (50) du dispositif de manipulation (10) et sont évaluées par rapport à des valeurs de capteur, de pression et/ou de consommation de courant et/ou des relations trajet-temps à attendre des instructions de commande pour les mouvements du manipulateur, et dans lequel un événement inattendu dans le déroulement de mouvement et/ou de manipulation du manipulateur (28) est reconnu et/ou dérivé en comparant les valeurs de consigne aux valeurs de capteur saisies, **caractérisé par le fait que**
au moins un capteur de contrainte, en particulier une jauge de contrainte (52), génère des signaux de sortie (38) induits par une contrainte et fournit ceux-ci à un circuit de commande et d'évaluation (40),
lequel manipulateur (28) est formé par un robot à cinématique parallèle (11) ou des trépieds ayant au moins trois bras de réglage (20) qui sont constitués chacun d'au moins deux sections de bras (22, 24) aptes à pivoter l'une par rapport à l'autre et qui peuvent être actionnés indépendamment les uns des autres,
lequel capteur de contrainte est associé à au moins un des bras de réglage (20) du manipulateur (28), au manipulateur (28) et/ou à un porte-outil (26) portant le manipulateur (28) et suspendu aux bras de réglage (20) du manipulateur (28) et lequel capteur de contrainte génère des signaux de sortie induits par une contrainte et fournit ceux-ci à un circuit de commande et d'évaluation (40).

2. Procédé selon la revendication 1, dans lequel le dispositif de manipulation (10) est formé par un robot portique ou fait partie d'un robot portique, dans lequel les mouvements et/ou contraintes de composant d'au moins un élément mobile d'une suspension du manipulateur (28) mobile dans au moins deux axes spatiaux différents à l'intérieur de l'espace de mouvement (30) sont détectés par capteur.

3. Procédé selon la revendication 1, dans lequel le dispositif de manipulation (10) est formé par un robot à cinématique parallèle ou fait partie d'un robot à cinématique parallèle, dans lequel les mouvements et/ou contraintes de composant d'au moins un élément mobile d'une suspension du manipulateur (28) mobile dans au moins deux axes spatiaux différents à l'intérieur de l'espace de mouvement (30) sont détectés par capteur.

4. Procédé selon la revendication 2 ou 3, dans lequel les accélérations du manipulateur (28) et/ou d'au moins un élément mobile de la suspension du dispositif de manipulation (10) sont détectées par capteur et sont comparées aux valeurs d'accélération à attendre des instructions de commande pour les mouvements du manipulateur au fil du temps, et/ou à un modèle de signal prédéfinissable.

5. Procédé selon la revendication 2 ou 3, dans lequel des valeurs caractéristiques mécaniques d'au moins un élément mobile de la suspension du dispositif de manipulation (10) sont détectées par capteur et sont comparées aux valeurs caractéristiques à attendre des instructions de commande pour les mouvements du manipulateur au fil du temps, et/ou à un modèle de signal prédéfinissable.

6. Procédé selon la revendication 2 ou 3, dans lequel les valeurs de consommation de courant d'au moins un moteur d'entraînement (50) du dispositif de manipulation (10) et/ou d'au moins un de deux, trois ou plusieurs bras de réglage (20) du robot à cinématique parallèle sont détectées par capteur et sont comparées aux valeurs de consommation de courant à attendre des instructions de commande pour les mouvements du manipulateur au fil du temps, et/ou à un modèle de signal prédéfinissable.

7. Procédé selon l'une quelconque des revendications 4 à 6, dans lequel, en plus des valeurs de capteur, les courbes trajet-temps dudit au moins un entraînement (50) surveillé du dispositif de manipulation (10) et/ou dudit au moins un de deux, trois ou plusieurs bras de réglage (20) du robot à cinématique parallèle sont surveillées et évaluées et sont utilisées pour détecter ledit événement inattendu dans le déroulement de mouvement et/ou de manipulation du manipulateur (28).

8. Procédé selon l'une quelconque des revendications 4 à 7, dans lequel l'analyse de signal et/ou la comparaison au modèle de signal prédéfini est utilisé(e) pour déclencher un arrêt de machine en fonction d'un événement.

9. Dispositif de manipulation (10) destiné à saisir, prendre, positionner, manier, déplacer, tourner, regrouper et/ou manipuler des articles, multipacks ou produits de détail transportés individuellement, par paires ou en groupes sur un dispositif de transport horizontal (12), lequel dispositif de manipulation (10) présente un manipulateur (28) qui est suspendu de manière mobile et peut être déplacé de manière commandée dans un espace de mouvement (30) au-dessus du dispositif de transport horizontal (12) et qui comprend un ou plusieurs moyens (44) pour saisir les articles, groupements, multipacks ou produits de détail, dans lequel audit manipulateur (28) et/ou à des parties de suspension mobiles du dispositif (10) qui sont reliées au manipulateur (28) et/ou à au moins un entraînement (50) pour le manipulateur (28) est associé au moins un capteur (36) destiné à détecter et/ou à surveiller des déroulements de mouvement au moins du manipulateur (28) et/ou à détecter des valeurs de consommation de courant, des valeurs de pression et/ou des courbes trajet-temps pour au moins un entraînement (50) du dispositif de manipulation (10), et dans lequel le dispositif de manipulation (10) comprend un circuit de commande et d'évaluation (40) ou est couplé à un tel circuit qui reconnaît et/ou dérive, à partir d'une évaluation des valeurs de capteur (38) par rapport à des valeurs de capteur, de pression et/ou de consommation de courant et/ou des relations trajet-temps à attendre des instructions de commande pour les mouvements du manipulateur et par une comparaison des valeurs de consigne aux valeurs de capteur (38) saisies, un événement inattendu dans le déroulement de mouvement et/ou de manipulation du manipulateur (28),
**caractérisé par le fait que**
le dispositif de manipulation (10) comprend au moins un capteur de contrainte, en particulier une jauge de contrainte (52), qui est associé à au moins un des bras de réglage (20), au manipulateur (28) et/ou à un porte-outil portant le manipulateur (28) et suspendu aux bras de réglage (20),
lequel manipulateur (28) est formé par un robot à cinématique parallèle (11) ou des trépieds ayant au moins trois bras de réglage (20) qui sont constitués chacun d'au moins deux sections de bras (22, 24) aptes à pivoter l'une par rapport à l'autre et qui peuvent être actionnés indépendamment les uns des autres,
lequel capteur de contrainte est associé à au moins un des bras de réglage (20) du manipulateur (28), au manipulateur (28) et/ou à un porte-outil (26) portant le manipulateur (28) et suspendu aux bras de réglage (20) du manipulateur (28) et lequel capteur de contrainte génère des signaux de sortie induits par une contrainte et fournit ceux-ci à un circuit de commande et d'évaluation (40).

10. Dispositif de manipulation (10) selon la revendication 9, qui est formé par un robot portique ou fait partie d'un robot portique, dans lequel au moins un élément mobile d'une suspension est équipé d'un capteur (36) destiné à détecter les mouvements de l'élément et/ou des contraintes de composants.

11. Dispositif de manipulation (10) selon la revendication 9, qui est formé par un robot à cinématique parallèle ou fait partie d'un robot à cinématique parallèle, dans lequel au moins un élément mobile de la suspension est équipé d'un capteur (36) destiné à détecter les mouvements de l'élément et/ou des contraintes de composants.

12. Dispositif de manipulation (10) selon la revendication 10 ou 11, dans lequel ledit au moins un capteur (36) détecte les accélérations du manipulateur (28) et/ou d'au moins un élément mobile de la suspension du dispositif de manipulation (10), et dans lequel les valeurs de capteur (38) sont comparées, dans le circuit de commande et d'évaluation (40), aux valeurs d'accélération à attendre des instructions de commande pour les mouvements de manipulateur au fil du temps.

13. Dispositif de manipulation (10) selon la revendication 10 ou 11, dans lequel ledit au moins un capteur (36) détecte les valeurs de caractéristiques mécaniques d'au moins un élément mobile de la suspension du dispositif de manipulation (10), et dans lequel les valeurs de capteur (38) sont comparées, dans le circuit de commande et d'évaluation (40), aux valeurs d'accélération à attendre des instructions de commande pour les mouvements de manipulateur au fil du temps.

14. Dispositif de manipulation (10) selon la revendication 10 ou 11, dans lequel le circuit de commande et d'évaluation (40) relève et/ou détecte par capteur les valeurs de consommation de courant d'au moins un moteur d'entraînement (50) du dispositif de manipulation (10) et/ou d'au moins un de deux, trois ou plusieurs bras de réglage (20) du robot à cinématique parallèle, et dans lequel dans le circuit de commande et d'évaluation (40) a lieu une comparaison des valeurs de consommation de courant détectées par capteur et/ou relevées, aux valeurs de consommation de courant à attendre des instructions de commandes pour les mouvements de manipulateur au fil du temps.

15. Dispositif de manipulation (10) selon l'une quelconque des revendications 12 à 14, dans lequel le circuit de commande et d'évaluation (40) surveille et évalue les courbes trajet-temps dudit au moins un entraînement surveillé (50) du dispositif de manipulation (10) et/ou dudit au moins un de deux, trois ou plusieurs bras de réglage (20) du robot à cinématique parallèle et utilise celles-ci pour détecter l'événement inattendu dans le déroulement de mouvement et/ou de manipulation du manipulateur (28).
